(19) **Europäisches Patentamt / European Patent Office / Office européen des brevets**

(11) **EP 2 134 099 B1**

(12) **EUROPEAN PATENT SPECIFICATION**

(45) Date of publication and mention
of the grant of the patent:
**14.10.2015 Bulletin 2015/42**

(51) Int Cl.:
*H04N 9/73* *(2006.01)*    *H04N 9/31* *(2006.01)*
*H04N 17/04* *(2006.01)*

(21) Application number: **08305261.3**

(22) Date of filing: **13.06.2008**

(54) **Method of compensation for spatial non-uniformities of image devices**

**Verfahren zur Kompensation räumlicher Ungleichheiten von Abbildungsvorrichtungen**

**Procédé de compensation de non-uniformités spatiales de dispositifs à images**

(84) Designated Contracting States:
**DE FR GB**

(43) Date of publication of application:
**16.12.2009 Bulletin 2009/51**

(73) Proprietor: **Thomson Licensing**
**92130 Issy-les-Moulineaux (FR)**

(72) Inventors:
• **Blonde, Laurent**
**35440, Montreuil sur Ille (FR)**
• **Stauder, Jürgen**
**35440, Montreuil sur Ille (FR)**
• **Moine, Carolone**
**35000, Rennes (FR)**

(74) Representative: **Vidon Brevets & Stratégie**
**16B, rue de Jouanet**
**BP 90333**
**35703 Rennes Cedex 7 (FR)**

(56) References cited:
**EP-A- 1 441 549    US-A1- 2006 126 138**

**Description**

The invention concerns a spatial 2D non-uniformity compensation method for a image reproduction device using at least one calibration chart comprising a set of color patches $P_{ij}$, each of said color patches $P_{ij}$ being uniform in color and having a calibration color $C_{ij}$, comprising :

- imaging said at least one calibration chart using said image reproduction device,
- measuring the color $S_m(l)$ within each patch of said at least one calibration chart that is imaged,
- inferring a 2D-map of color non-uniformity correction factors from said color measurements $S_m(l)$.

Such a method is generally used for calibration of image reproduction devices. A similar method of compensation for spatial 2D non-uniformity and the corresponding calibration method is also known for image capture devices.

When an image is displayed by an image-reproduction device such as a projector, spatial color non-uniformity (including color non-uniformity due to luminance non-uniformity) is created in the image, and then the quality of reproduction of the images deteriorates. Similarly, when an image is captured by an image-capture device such as a camera, spatial color non-uniformity (including color non-uniformity due to luminance non-uniformity) is created in the captured images, then the quality of capture of the images deteriorates.

The document US7170535 discloses a spatial non-uniformity compensation method for a image-reproduction device using a calibration chart comprising a set of color patches, each being uniform in color, comprising :

- imaging the calibration chart using the image-reproduction device,
- measuring the color within each patch of the calibration chart that is imaged,
- inferring a 2D-map of color non-uniformity correction factors from the color measurements.

An object of the invention is to simplify the method that is disclosed in US7170535.

For this purpose, the subject of the invention is a spatial 2D non-uniformity compensation method for an image **reproduction** device using at least one calibration chart comprising a set of color patches $P_{ij}$, each of said color patches $P_{ij}$ being uniform in color and having a calibration color $C_{ij}$, comprising :

- imaging said at least one calibration chart using said image reproduction device,
- measuring the color $S_m(l)$ within each patch of said at least one calibration chart that is imaged,
- inferring a 2D-map of color non-uniformity correction factors from said color measurements $S_m(l)$,

wherein :

- for each color patch, several color measurements $S_m(l)$ are performed at different spatial locations within said color patch;
- at least one spatial non-uniformity correction function $A$ ($l$) is obtained from the ratio of the gradient $S'_m(l)$ of the color measurements $S_m(l)$ over these different spatial locations in each color patch to the color measurements itself $S_m(l)$ at these different spatial locations,
- said 2D-map of color non-uniformity correction factors is derived and, as necessary, interpolated, from a set of values of said at least one spatial non-uniformity correction function $A(l)$.

Preferably, in said at least one calibration chart, color patches $P_{ij}$ are distributed along at least one measurement line $L_j$, and :

- color measurements are performed along said at least one measurement line $L_j$ along which color patches $P_{ij}$ are distributed,
- said gradient $S'_m(l)$ of the color measurements $S_m(l)$ is calculated within each of said color patches $P_{ij}$ along said at least one measurement line $L_j$,
- said at least one spatial non-uniformity correction function $A_j(l)$ is obtained along said at least one measurement line $L_j$.

Preferably, in said at least one calibration chart, color patches $P_{ij}$ are distributed along a plurality of horizontal measurement lines $L_j$ and some of these color patches $P_{ij}$ are also distributed along at least one vertical measurement line $V_i$, and :

- color measurements are performed along each horizontal measurement line $L_j$ along which color patches $P_{ij}$ are distributed,
- a vertical spatial non-uniformity correction function $A_i(l)$ along the at least one vertical measurement line $L_j$ is obtained from the measurements that are performed on the color patches $P_{ij}$ that are distributed along this at least one vertical measurement line $L_j$,
- along each horizontal measurement line $L_j$, said gradient $S'_m(l)$ of the color measurements $S_m(l)$ is calculated within each of said color patches $P_{ij}$, and said spatial non-uniformity correction function $A_j(l)$ along this horizontal measurement line $L_j$ is obtained also from said vertical spatial non-uniformity correction function $A_i(l)$.

The subject of the invention is also a spatial 2D non-uniformity compensation method for an image-**capture** device using at least one calibration chart comprising a set of color patches $P_{ij}$, each of said color patches

$P_{ij}$ being uniform in color and having a calibration color $C_{ij}$, comprising :

- capturing said at least one calibration chart using said image-**capture** device,
- comparing the captured color of each patch $P_{ij}$ of said at least one calibration chart with the calibration color $C_{ij}$ of said patch $P_{ij}$ to infer a 2D-map of color non-uniformity correction factors,

wherein :

- for each color patch, several color comparisons $S_m(l)$ are performed at different spatial locations within said color patch;
- at least one spatial non-uniformity correction function $A(l)$ is obtained from the ratio of the gradient $S'_m(l)$ of the color comparisons $S_m(l)$ over these different spatial locations in each color patch to the color comparisons itself $S_m(l)$ at these different spatial locations,
- said 2D-map of color non-uniformity correction factors is derived and, as necessary, interpolated, from a set of values of said at least one spatial non-uniformity correction function $A(l)$.

Preferably, in said at least one calibration chart, color patches $P_{ij}$ are distributed along at least one comparison line $L_j$, and :

- color comparisons are performed along said at least one comparison line $L_j$ along which color patches $P_{ij}$ are distributed,
- said gradient $S'_m(l)$ of the color comparisons $S_m(l)$ is calculated within each of said color patches $P_{ij}$ along said at least one comparison line $L_j$,
- said at least one spatial non-uniformity correction function $A_j(l)$ is obtained along said at least one comparisons line $L_j$.

Preferably, in said at least one calibration chart, color patches $P_{ij}$ are distributed along a plurality of horizontal comparison lines $L_j$ and some of these color patches $P_{ij}$ are also distributed along at least one vertical comparison line $V_i$, and :

- color comparisons are performed along each horizontal comparison line $L_j$ along which color patches $P_{ij}$ are distributed,
- a vertical spatial non-uniformity correction function $A_i(l)$ along the at least one vertical comparison line $L_j$ is obtained from the comparisons that are performed on the color patches $P_{ij}$ that are distributed along this at least one vertical comparison line $L_j$,
- along each horizontal comparison line $L_j$, said gradient $S'_m(l)$ of the color comparisons $S_m(l)$ is calculated within each of said color patches $P_{ij}$, and said spatial non-uniformity correction function $A_j(l)$ along

this horizontal comparison line $L_j$ is obtained also from said vertical spatial non-uniformity correction function $A_i(l)$.

The spatial 2D uniformity compensation method according to the invention may notably encompass the following features and give the following advantages :

- Color calibration charts are defined with color patches with the following low constraints on geometrical arrangement:

    ○ Positions/locations with local color uniformity.

    ○ The alignment of such positions/locations, preferably in two dimensions.

    ○ The distribution of these positions/locations over the entire 2D surface to compensate for non-uniformity.

- On the measured XYZ images of the color charts, these aligned positions/locations with local color uniformity are identified, and a first derivative of the measurements is computed locally,

- a series of mono-dimensional non-uniformity correction functions is determined preferably in at least two directions, by combining these local first derivatives,

- the mono-dimensional correction functions are combined and, is necessary, interpolated to obtain a two-dimensional correction function covering the entire 2D surface to compensate for non-uniformity.

The invention will be more clearly understood on reading the description which follows, given by way of non-limiting example and with reference to the appended figures in which:

- Figure 1 illustrates a system to implement a main embodiment of the method according to the invention;
- Figure 2 illustrates a calibration chart that is used in the system of figure 1, with different measurement lines $L_1$, $L_2$, $L_3$, to implement the main embodiment of the method according to the invention;
- Figure 3 illustrates the color measurements $S_m(l)$ that are performed at different spatial locations along the measurement line $L_1$ of figure 1, the spatial non-uniformity correction function $A_j(l)$ that is calculated along this measurement line $L_1$, and the color measurements $S_0(l)$ as corrected by this non-uniformity correction function $A_j(l)$ along this measurement line $L_1$;
- Figure 4 illustrates the gradient $S'_m(l)$ of the color measurements $S_m(l)$ of figure 3 along the measurement line $L_1$;

- Figure 5 illustrates the ratio of the gradient $S'_m(l)$ of figure 4 to the color measurements itself $S_m(l)$ of figure 3, along the measurement line $L_1$;
- Figure 6 illustrates the polynomial regression of the segmented curve of figure 5, as used in the main embodiment of the method according to the invention.

The figures take no account of the scale of values so as to better reveal certain details, which would not be clearly apparent if the proportions had been respected.

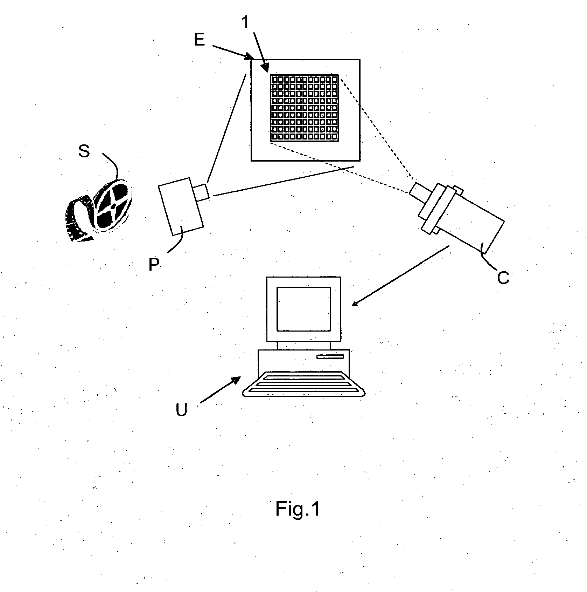

Referring to figure 1, the image reproduction device P to calibrate is a video projector using films or film loops S as source images. For the calibration, a calibration set of different calibration charts 1, 2, 3, ... is prepared on a film or different film loops. Using this film or film loops S , the image reproduction device P projects images of these different calibration charts 1, 2, 3, ... on a projection screen E. An imaging colorimeter C captures these different projected images and transfers the data related to these images to a control unit U for further processing.

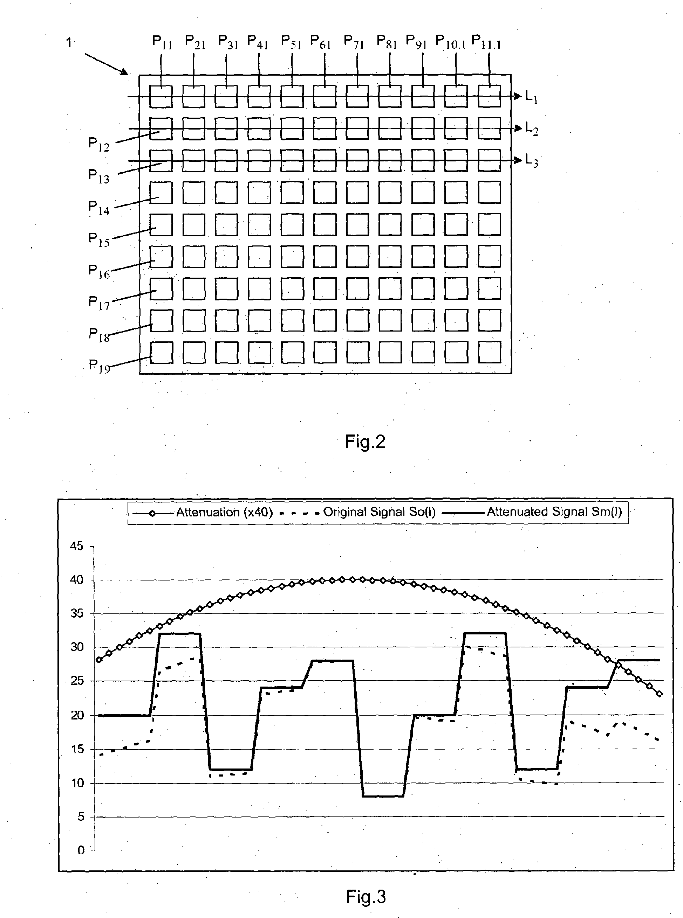

A calibration chart 1 according to a **main embodiment** of the invention will now be described in reference to figure 2. This chart 1 comprises a plurality of color patches that are distributed into 11 columns and 9 rows. Each color patch $P_{ij}$ is referenced to its column i and its row j. To each color patch $P_{ij}$, is associated a uniform calibration color $C_{ij}$.

Generally speaking, color calibration charts (or "targets") may be printed on paper or film, or may be electronically stored. Each chart or target comprises a plurality of color patches having different colors, the color of each patch being generally homogeneous on its entire surface. Prior art documents disclose many kinds of calibration charts that may be used to implement the method according to the invention. The documents US6494557 and US2003/063338 disclose color charts for calibration of color printers. The document US7170535 discloses color charts for calibration of image reproduction devices. The documents WO2007/025878, US4745467, US6404517 and US6069973 disclose calibration charts or targets having horizontal color stripes as color patches. The document US6284445 discloses a specific arrangement of calibration patches in a two dimensional array. The document US5416613 discloses a calibration target for color printer having a plurality of color patches, some of which may be repeated at spatially disparate locations selected to keep local printer non-uniformities from affecting the repeated locations. The document US6717674 refers to standardized IT8 calibration targets and discloses using a calibration target having two groups of color patches wherein some color patches of the first group are repeated in the second group, to evaluate or to compensate some non -uniformities : applied to a printer, a stability of colors in an in-plane direction and a stability of colors for the lapse of time at the time when the printer outputs an image are determined. The Committee IT8 for Digital Data Exchange Standards of the American National Standard Institute (ANSI) has established for many year series of calibration test targets referenced IT8.7/1, IT8.7/2, IT8.7/3 that are more specifically dedicated to the calibration of scanners, presses, and printers in the graphic Industry.

As imaging colorimeter C, an instrument called "MURATest" is used. This instrument is based on five optical filters (two for red component, and two for green component, and one for the blue component) to capture simultaneously the image of several calibration color patches as projected on the screen E. This imaging colorimeter C is manufactured by the ELDIM Company based in Caen, France. Such an imaging colorimeter C acquires in a single shot a total matrix of XYZ values as would do a digital still camera. For this instrument, the size of this XYZ image is 1441x961 pixels. The output values that are delivered by this instrument are high dynamic calibrated XYZ measurements in the visual domain. For each pixel of the projected image, X, Y, Z data values are delivered, these values representing the color of this pixel in the CIE XYZ visual color space.

An embodiment of the **method of compensation of the spatial non-uniformity** of the image reproduction device P according to the invention will now be described in reference to figures 2 to 4.

For each calibration color chart 1, 2, 3 that is imaged on the projection screen E, color measurements are performed along a plurality of horizontal measurement lines $L_1$, $L_2$, $L_3$, ... at different vertical positions, in order to scan the width and the height of the calibration chart. For instance, as the first measurement line $L_1$ crosses the color patches $P_{11}$, $P_{21}$, $P_{31}$, $P_{41}$, $P_{51}$, $P_{61}$, $P_{71}$, $P_{81}$, $P_{91}$, $P_{10.1}$, $P_{11.1}$ of the first horizontal row of the first color chart 1, color measurements $S_m(l) = \{ X, Y, Z \}$ are performed by the imaging colorimeter C at a series of measurement locations that are regularly distributed all along this measurement line $L_1$, with several measurement locations within each crossed color patch. Each measurement $S_m(l)$ comprises three values X, Y, Z representing the measured color in the XYZ CIE1931 color space. The following calculation steps are preferably performed for each of these values to correct simultaneously color and luminance non-uniformity. Identical process is performed for all measurement lines $L_j$, [j = 1 to 11].

It is important to determine the exposure time needed for accurate measurements, it means with a correct signal to noise ratio (as noise is mainly photon noise, it decreases with exposure time). This optimum exposure time depends on the colors to be measured and may vary from one calibration color chart to the other. The setting of the optimum exposure time for each calibration color chart is determined in a manner known per se. The optimum exposure time can be about one minute for a bright image, against forty-five minutes for a very dark one. Once charts have been defined, each with a known optimal exposure time, film loops can be prepared, repeating the right number of frames for each chart (loops comprise about 120 frames).

It is also important to determine a horizontal spatial non-uniformity correction function $A_1(l)$ that compensate for the global non-homogeneity of the images displayed on the screen E along the line $L_1$, that comes from the image reproduction device P itself. As a matter of fact, a film projector generally presents a fall-off from the centre to the sides of the screen, that is moreover possibly combined with a spatially variable attenuation of the imaging colorimeter C. Consequently, all color measurements $S_m(l)$ that are performed at a position $l$ on the line $L_1$ should be corrected such that the corrected and final measurement $S_0(l)$ is such that $S_m(l) = A_1(l) \cdot S_0(l)$. Considering the horizontal series of color patches $P_{11}$, $P_{21}$, ..., $P_{11.1}$ distributed along the first measurement line $L_1$ of the calibration chart 1, as each color patch has a uniform color, an example of corrected measurements $S_0(l)$ should be represented by a series of rectangular steps distributed along this line $L_1$; if the image reproduction device P has a horizontal spatial non-uniformity correction function $A_1(l)$ on the line $L_1$, each measurement $S_m(l)$ is the product of the two functions such that: $S_m(l) = A_1(l) \cdot S_0(l)$. In Figure 3, the plain thick curve represents $S_0(l)$ ("attenuated signal"), the plain light curve with symbols ◊ represents $A_1(l)$ ("attenuation") and the dotted curve represents $S_m(l)$ ("original signal") as measured along the line $L_1$.

The objective is here to determine the horizontal spatial non-uniformity correction function $A_1(l)$ along the measurement line $L_1$, knowing only actual color measurements $S_m(l)$ along this line. We first consider that, within each color patch along this line $L_1$, information about the function $A_1(l)$ is included in the derivative of the different color measurements $S_m(l)$ that are performed within this color patch. Moreover, as $A_j(l)$ acts as a multiplicative correction factor, the ratio of the derivate

$$S_m'(l) \quad \left( \text{i.e.} \quad \frac{d(S_m(l))}{dl} \right) \text{ over } S_m(l) \text{ is independent}$$

of the measurements $S_m$ within each color patch along this line $L_1$, because the actual color is uniform within this color patch. This is demonstrated by developing $S_m'(l)$

as follows : $\quad S_m' = \left( A_1 . S_0 \right)' = A_1 . S_0' + S_0 . A_1'$. Because the actual color is uniform within each color patch, we have $S_0' = 0$, giving then $S_m' = S_0 . A_1'$.

As a consequence, we have the equations:

$$\frac{S_m'}{S_m} = \frac{S_0 . A_1'}{S_0 . A_1} = \frac{A_1'}{A_1}.$$

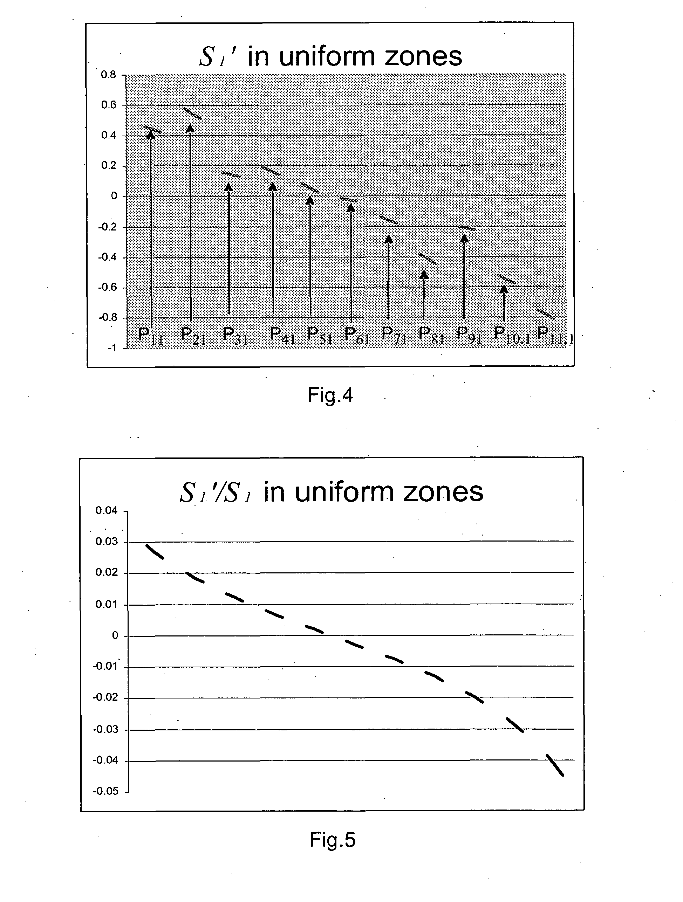

Figure 4 shows the derivative, i.e. gradient of measurements, $S_m'(l)$ over the different color measurements $S_m(l)$ performed within the different color patches $P_{11}$, $P_{21}$, $P_{31}$, $P_{41}$, $P_{51}$, $P_{61}$, $P_{71}$, $P_{81}$, $P_{91}$, $P_{10.1}$, $P_{11.1}$ that are distributed along the measurement line $L_1$.

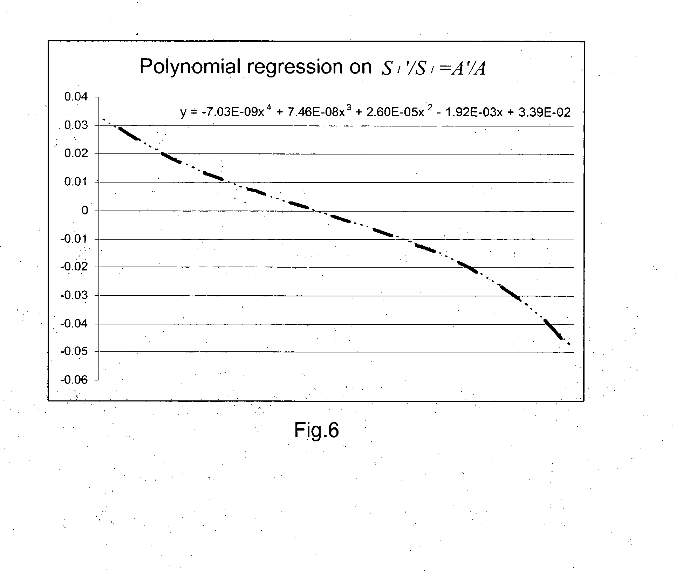

Figure 5 shows the ratio $\dfrac{S_m'}{S_m} = \dfrac{A_1'}{A_1}$ within the same different color patches along the same measurement line $L_1$. As can be seen on this figure, this ratio follows a smooth curve which can be approximated by a polynomial function, using a usual polynomial regression method, as exemplified on Figure 6. The above ratios are then approximated according to a polynomial function

as follows: $\dfrac{S_m'}{S_m} = \dfrac{A_1'}{A_1} = \sum\limits_{p=0}^{n} \left( a_{p1} l^p \right)$, where n+1 is the number of measurements distributed on the different color patches of the measurement line $L_1$.

To infer an approximation of the horizontal spatial non-uniformity correction function $A_1(l)$, it is to be noted that $\dfrac{A_1'}{A_1} = \left( \ln(A_1) \right)'$, and that consequently, by integrating the polynomial function above, we have the

equations: $\quad \ln(A_1) = \sum\limits_{p=0}^{n} \left( \dfrac{a_{p1}}{p+1} l^{p+1} \right) + \ln(k_1)$,

then : $A_1(l) = k_1 \cdot \exp \left[ \sum\limits_{p=0}^{n} \left( \dfrac{a_{p1}}{p+1} l^{p+1} \right) \right]$, where

$k_1$ is a constant of integration.

To recapitulate the above calculations, a horizontal spatial non-uniformity correction function $A_1(l)$ along the measurement line $L_1$ is obtained from the ratio of the gradient $S_m'(l)$ of the color measurements $S_m(l)$ along this measurement line $L_1$ to the color measurements itself $S_m(l)$ within each color patch crossing this measurement line $L_1$.

Repeating the above operation for each measurement line $L_j$ [j = 1 to 9] gives a set of horizontal non-uniformity correction functions $\{A_j(l) = k_j \cdot \exp(P_j)\}$ where $P_j$ is the polynomial expression:

$$P_j = \sum_{p=0}^{n} \left( \frac{a_{pj}}{p+1} l^{p+1} \right).$$

The remaining unknown values concerns the constants of integration $k_j$; these values should be determined for each measurement line Lj [j = 1 to 9]. In theory, as explained below, determining non-uniformity correction functions vertically instead of horizontally, over a single vertical direction can give these values $k_j$. If we note $V_i$ this vertical direction and $A_i(l)$ the vertical non-uniformity correction function over this vertical direction, we have the equations $A_j(V_i) = A_i(t)$ for each horizontal measurement line $L_j$ [j = 1 to 9] crossing this vertical direction.

We then have: $A_j(V) = A_i(l) = k_j \cdot \exp\lfloor P_j(V) \rfloor$ and each $k_j$ can be computed by:

$$k_j = \frac{A_i(l)}{\exp[P_j(V)]} \cdot A_i(l)$$

may be directly the signal along the given vertical direction normalized to its maximum or a polynomial approximation of it. In practice and for more precision, several vertical directions $V_i$ may be used, and the different resulting $k_j$ values that are obtained are averaged to get the final value of $k_j$.

Eventually and globally, a set of horizontal non-uniformity correction functions $\{A_j = k_j \cdot \exp(P_j)\}$ [j = 1 to 9] is obtained from the ratio of the gradient $S'_m(l)$ of the color measurements $S_m(l)$ over the different spatial locations of measurements in each color patch to the color measurements itself $S_m(l)$ at these different spatial locations, and from the vertical spatial non-uniformity correction function $A_i(l)$. Using this set of horizontal non-uniformity correction functions, it is possible to calculate a non-uniformity correction factor for any horizontal or vertical location on the projection screen E, then providing a 2D-map of color non-uniformity correction factors for the entire projection screen E. A non-uniformity correction factor at a given location is the value of the non-uniformity correction factor at this location. Such a calculation may need further iteration, notably for locations that are positioned between two adjacent measurement lines. The attenuation $A_1(l)$ is computed for each measurement point dividing $s_{0(ij)}$ by $S_m(l_i)$. From each measurement and its location, a two dimensional function representing the global attenuation is built using 2D interpolation (e.g. 2D splines) to propagate from the measured points to the entire image surface. Globally, the 2D-map of color non-uniformity correction factors is derived and, as necessary, interpolated, from a set of values of the different spatial non-uniformity correction functions $A_j(l)$, [j = 1 to 9].

The control unit U is adapted in a manner known per se to perform all the steps described above concerning the calculation of the 2D-map of color non-uniformity correction factors, from the data, i.e. the different color measurements $S_m(l)$, than have been transferred from the image colorimeter C.

**Globally,** for any position on the image surface, i.e. on the projection screen E, a color non-uniformity correction factor can be obtained that will allow to compensate efficiently and precisely for the spatial non-uniformities of the image reproduction device P.

Any usual calibration process can then be prosecuted in a manner known per se, for instance by a comparison between each calibration color Cij of a color patch Pij with the corrected and final measurement $S_{0(ij)}$ of this patch.

It has to be pointed out that instead of being distributed along a plurality of horizontal measurement lines $L_j$ in the different calibration charts that are used for calibration, the color patches $P_{ij}$ of each calibration charts can be distributed along all other kind of lines, as, for instance, vertical lines, or, even, not lines that are not straight. Whatever are these measurement lines, each gradient of the color measurements is calculated along a measurement line.

Preferably, in order to optimize and to limit the number of calibration colors $C_{ij}$ and consequently the number of color patches $P_{ij}$ to measure, the calibration colors of the different color patches are regularly distributed in the CIE L*a*b* color space along each measurement line $L_j$; more precisely, the calibration color of each color patch is separated from the calibration color of any adjacent color patch of the same measurement line by the same distance $d_{ref}$ in the CIE L*a*b* color space. The CIE L*a*b* color space is a perceptually uniform visual color space. Other perceptually uniform visual color spaces may used instead, as the CIE L*u*v*.

Other image reproduction devices can be advantageously uniformity-compensated (and then calibrated) using the calibration method according to the invention, as for instance image display devices as LCD or PDP, or printers, or copying machines. Any kind of spatial non-uniformities, different from the spatial non-uniformities of a film projector, can be advantageously compensated.

The general method according to the invention can also be advantageously used to compensate for uniformity defect of image-capture devices, as cameras and scanners. To calibrate the image-capture device using this method, the calibration chart 1 will be captured by the image-capture device to calibrate, and the captured color of each patch $P_{ij}$ of this chart will be compared to the actual calibration color $C_{ij}$ of this patch $P_{ij}$. In a similar way as described above, horizontal spatial non-uniformity correction functions $A_j(l)$ are obtained from the ratios of the gradient $S'_m(l)$ of the color comparisons $S_m(l)$ over the different spatial locations of comparisons in each color patch to the color comparisons itself $S_m(l)$ at these different spatial locations, and from a vertical spatial non-uniformity correction functions $A_i(l)$. This method allows to compensate for the spatial 2D uniformity defects of the light sensors of the image-capture device, which are for instance CCD devices or CMOS devices.

These and other features and advantages of the principles of the present invention may be readily ascertained by one of ordinary skill in the pertinent art based on the teachings herein. It is to be understood that the teachings of the present invention may be implemented in various forms of hardware, software, firmware, special purpose processors, or combinations thereof.

While the present invention is described with respect to particular examples and preferred embodiments, it is understood that the present invention is not limited to these examples and embodiments. The present invention as claimed therefore includes variations from the particular examples and preferred embodiments described herein, as will be apparent to one of skill in the art. While some of the specific embodiments may be described and claimed separately, it is understood that the various features of embodiments described and claimed herein may be used in combination.

**Claims**

1. Spatial 2D-map non-uniformity generation method for an image reproduction device using at least one calibration chart (1) comprising a set of color patches $P_{ij}$ that are distributed over the entire 2D surface to compensate for non-uniformity, each of said color patches $P_{ij}$ being uniform in color and having a calibration color $C_{ij}$, comprising :

   - imaging said at least one calibration chart using said image reproduction device,
   - measuring the color $S_m(I)$ within each patch of said at least one calibration chart that is imaged,
   - inferring a 2D-map of color non-uniformity correction factors from said color measurements $S_m(I)$,
   **characterized in that**:
   - for each color patch, several color measurements $S_m(I)$ are performed at different spatial locations within said color patch;
   - at least one spatial non-uniformity correction function $A(I)$ is obtained from the ratio of the gradient $S'_m(I)$ of the color measurements $S_m(I)$ over these different spatial locations in each color patch to the color measurements itself $S_m(I)$ at these different spatial locations,
   - said 2D-map of color non-uniformity correction factors is derived and, as necessary, interpolated, from a set of values of said at least one spatial non-uniformity correction function $A(I)$.

2. Spatial 2D-map non-uniformity generation method according to claim 1, wherein, in said at least one calibration chart (1), color patches $P_{ij}$ are distributed on said 2D surface along at least one measurement line $L_j$, **characterized in that**:

   - color measurements are performed along said at least one measurement line $L_j$ along which color patches $P_{ij}$ are distributed,
   - said gradient $S'_m(I)$ of the color measurements $S_m(I)$ is calculated within each of said color patches $P_{ij}$ along said at least one measurement line $L_{j'}$
   - said at least one spatial non-uniformity correc-

tion function $A_j(I)$ is obtained along said at least one measurement line $L_j$.

3. Spatial 2D-map non-uniformity generation method according to claim 1, wherein, in said at least one calibration chart (1), color patches $P_{ij}$ are distributed on said 2D surface along a plurality of horizontal measurement lines $L_j$ and some of these color patches $P_{ij}$ are also distributed on said 2D surface along at least one vertical measurement line $V_i$, **characterized in that**:

   - color measurements are performed along each horizontal measurement line $L_j$ along which color patches $P_{ij}$ are distributed,
   - a vertical spatial non-uniformity correction function $A_i(I)$ along the at least one vertical measurement line $L_j$ is obtained from the measurements that are performed on the color patches $P_{ij}$ that are distributed along this at least one vertical measurement line $L_j$,
   - along each horizontal measurement line $L_j$, said gradient $S'_m(I)$ of the color measurements $S_m(I)$ is calculated within each of said color patches $P_{ij}$, and said spatial non-uniformity correction function $A_j(I)$ along this horizontal measurement line $L_j$ is obtained also from said vertical spatial non-uniformity correction function $A_i(I)$.

4. Spatial 2D-map non-uniformity generation method for an image-capture device using at least one calibration chart (1) comprising a set of color patches $P_{ij}$ that are distributed on the entire 2D surface to compensate for non-uniformity, each of said color patches $P_{ij}$ being uniform in color and having a calibration color $C_{ij}$, comprising :

   - capturing said at least one calibration chart using said image-capture device,
   - comparing the captured color of each patch $P_{ij}$ of said at least one calibration chart with the calibration color $C_{ij}$ of said patch $P_{ij}$ to infer a 2D-map of color non-uniformity correction factors,
   **characterized in that**:
   - for each color patch, several color comparisons $S_m(I)$ are performed at different spatial locations within said color patch;
   - at least one spatial non-uniformity correction *function $A(I)$* is obtained from the ratio of the gradient $S'_m(I)$ of the color comparisons $S_m(I)$ over these different spatial locations in each color patch to the color comparisons itself $S_m(I)$ at these different spatial locations,
   - said 2D-map of color non-uniformity correction factors is derived and, as necessary, interpolated, from a set of values of said at least one spatial non-uniformity correction function $A(I)$.

**5.** Spatial 2D-map non-uniformity generation method according to claim 4, wherein, in said at least one calibration chart (1), color patches P$_{ij}$ are distributed on said 2D surface along at least one comparison line L$_j$, **characterized in that**:

- color comparisons are performed along said at least one comparison line L$_j$ along which color patches P$_{ij}$ are distributed,
- said gradient $S'_m(l)$ of the color comparisons $S_m(l)$ is calculated within each of said color patches P$_{ij}$ along said at least one comparison line L$_j$,
- said at least one spatial non-uniformity correction function $A_j(l)$ is obtained along said at least one comparisons line L$_j$.

**6.** Spatial 2D-map non-uniformity generation method according to claim 4, wherein, in said at least one calibration chart (1), color patches P$_{ij}$ are distributed on said 2D surface along a plurality of horizontal comparison lines L$_j$ and some of these color patches P$_{ij}$ are also distributed on said 2D surface along at least one vertical comparison line V$_i$, **characterized in that**:

- color comparisons are performed along each horizontal comparison line L$_j$ along which color patches P$_{ij}$ are distributed,
- a vertical spatial non-uniformity correction function $A_i(l)$ along the at least one vertical comparison line L$_j$ is obtained from the comparisons that are performed on the color patches P$_{ij}$ that are distributed along this at least one vertical comparison line L$_j$,
- along each horizontal comparison line L$_j$, said gradient $S'_m(l)$ of the color comparisons $S_m(l)$ is calculated within each of said color patches P$_{ij}$, and said spatial non-uniformity correction function $A_j(l)$ along this horizontal comparison line L$_j$ is obtained also from said vertical spatial non-uniformity correction function $A_i(l)$.

**Patentansprüche**

**1.** Verfahren zur Erzeugung eine 2D-Karte räumlicher Ungleichförmigkeiten für eine Bildwiedergabevorrichtung unter Verwendung mindestens einer Kalibrierungskarte (1), die eine Menge von Farbflecken P$_{ij}$, die über die gesamte 2D-Oberfläche verteilt sind, umfasst, um eine Ungleichförmigkeit zu kompensieren, wobei jeder der Farbflecken P$_{ij}$ eine gleichförmige Farbe aufweist und eine Kalibrierungsfarbe C$_{ij}$ aufweist, wobei das Verfahren umfasst:

- Abbilden der mindestens einen Kalibrierungskarte unter Verwendung der Bildwiedergabe-

vorrichtung,
- Messen der Farbe S$_m$(l) innerhalb jedes Flecks der mindestens einen Kalibrierungskarte, der abgebildet wird,
- Folgern einer 2D-Karte von Farbungleichförmigkeits-Korrekturfaktoren aus den Farbmessungen S$_m$(l),
**dadurch gekennzeichnet, dass**
- für jeden Farbfleck mehrere Farbmessungen S$_m$(l) an unterschiedlichen räumlichen Orten innerhalb des Farbflecks ausgeführt werden;
- aus dem Verhältnis des Gradienten S'$_m$(l) der Farbmessungen S$_m$(l) über diese unterschiedlichen räumlichen Orte in jedem Farbfleck zu den Farbmessungen selbst S$_m$(l) an diesen unterschiedlichen räumlichen Orten mindestens eine Korrekturfunktion A(l) räumlicher Ungleichförmigkeiten erhalten wird,
- aus einer Menge von Werten der mindestens einen Korrekturfunktion A(l) räumlicher Ungleichförmigkeiten die 2D-Karte von Farbungleichförmigkeits-Korrekturfaktoren hergeleitet wird und bei Bedarf interpoliert wird.

**2.** Verfahren zur Erzeugung eine 2D-Karte räumlicher Ungleichförmigkeiten nach Anspruch 1, wobei in der mindestens einen Kalibrierungskarte (1) Farbflecken P$_{ij}$ auf der 2D-Oberfläche entlang mindestens einer Messlinie L$_j$ verteilt sind, **dadurch gekennzeichnet, dass**

- entlang der mindestens einen Messlinie L$_j$, entlang deren Farbflecken P$_{ij}$ verteilt sind, Farbmessungen ausgeführt werden,
- entlang der mindestens einen Messlinie L$_j$ innerhalb jedes der Farbflecken P$_{ij}$ der Gradient S'$_m$(l) der Farbmessungen S$_m$(l) berechnet wird,
- entlang der mindestens einen Messlinie L$_j$ die mindestens eine Korrekturfunktion A$_j$(l) räumlicher Ungleichförmigkeiten erhalten wird.

**3.** Verfahren zur Erzeugung eine 2D-Karte räumlicher Ungleichförmigkeiten nach Anspruch 1, wobei in der mindestens einen Kalibrierungskarte (1) Farbflecken P$_{ij}$ auf der 2D-Oberfläche entlang mehrerer horizontaler Messlinien L$_j$ verteilt sind und einige dieser Farbflecken P$_{ij}$ ebenfalls auf der 2D-Oberfläche entlang mindestens eine vertikalen Messlinie V$_i$ verteilt sind, **dadurch gekennzeichnet, dass**

- entlang jeder horizontalen Messlinie L$_j$, entlang deren Farbflecken P$_{ij}$ verteilt sind, Farbmessungen ausgeführt werden,
- aus den Messungen, die an den Farbflecken P$_{ij}$ ausgeführt werden, die entlang dieser mindestens einen vertikalen Messlinie L$_j$ verteilt sind, eine Korrekturfunktion A$_i$(1) vertikaler räumlicher Ungleichförmigkeiten entlang der mindestens einen vertikalen Messlinie $L_j$ erhalten wird,

- entlang jeder horizontalen Messlinie $L_j$ der Gradient $S'_m(l)$ der Farbmessungen $S_m(l)$ innerhalb jedes der Farbflecken $P_{ij}$ berechnet wird und die Korrekturfunktion $A_j(l)$ räumlicher Ungleichförmigkeiten entlang dieser horizontalen Messlinie $L_j$ ebenfalls aus der Korrekturfunktion $A_i(l)$ vertikaler räumlicher Ungleichförmigkeiten erhalten wird.

4. Verfahren zur Erzeugung eine 2D-Karte räumlicher Ungleichförmigkeiten für eine Bilderfassungsvorrichtung unter Verwendung mindestens einer Kalibrierungskarte (1), die eine Menge von Farbflecken $P_{ij}$, die auf der gesamten 2D-Oberfläche verteilt sind, umfasst, um eine Ungleichförmigkeit zu kompensieren, wobei jeder der Farbflecken $P_{ij}$ eine gleichförmige Farbe aufweist und eine Kalibrierungsfarbe $C_{ij}$ aufweist, wobei das Verfahren umfasst:

- Erfassen der mindestens einen Kalibrierungskarte unter Verwendung der Bilderfassungsvorrichtung,
- Vergleichen der erfassten Farbe jedes Flecks $P_{ij}$ der mindestens einen Kalibrierungskarte mit der Kalibrierungsfarbe $C_{ij}$ des Flecks $P_{ij}$, um eine 2D-Karte von Farbungleichgewichts-Korrekturfaktoren zu folgern,

**dadurch gekennzeichnet, dass**

- für jeden Farbfleck mehrere Farbvergleiche $S_m(l)$ an unterschiedlichen räumlichen Orten innerhalb des Farbflecks ausgeführt werden;
- aus dem Verhältnis des Gradienten $S'_m(l)$ der Farbvergleiche $S_m(l)$ über diese unterschiedlichen räumlichen Orte in jedem Farbfleck zu den Farbvergleichen selbst $S_m(l)$ an diesen unterschiedlichen räumlichen Orten mindestens eine Korrekturfunktion $A(l)$ räumlicher Ungleichförmigkeiten erhalten wird,
- aus einer Menge von Werten der mindestens einen Korrekturfunktion $A(l)$ räumlicher Ungleichförmigkeiten die 2D-Karte von Farbungleichförmigkeits-Korrekturfaktoren hergeleitet wird und bei Bedarf interpoliert wird.

5. Verfahren zur Erzeugung eine 2D-Karte räumlicher Ungleichförmigkeiten nach Anspruch 4, wobei in der mindestens einen Kalibrierungskarte (1) Farbflecken $P_{ij}$ auf der 2D-Oberfläche entlang mindestens einer Vergleichslinie $L_j$ verteilt sind,

**dadurch gekennzeichnet, dass**

- entlang der mindestens einen Vergleichslinie $L_j$, entlang deren Farbflecken $P_{ij}$ verteilt sind, Farbvergleiche ausgeführt werden,
- entlang der mindestens einen Vergleichslinie $L_j$ der Gradient $S'_m(l)$ der Farbvergleiche $S_m(l)$

innerhalb jedes der Farbflecken $P_{ij}$ berechnet wird,

- entlang der mindestens einen Vergleichslinie $L_j$ die mindestens eine Korrekturfunktion $A_j(l)$ räumlicher Ungleichförmigkeiten erhalten wird.

6. Verfahren zur Erzeugung eine 2D-Karte räumlicher Ungleichförmigkeiten nach Anspruch 4, wobei in der mindestens einen Kalibrierungskarte (1) Farbflecken $P_{ij}$ auf der 2D-Oberfläche entlang mehrerer horizontaler Vergleichslinien $L_j$ verteilt sind und einige dieser Farbflecken $P_{ij}$ ebenfalls auf der 2D-Oberfläche entlang mindestens einer vertikalen Vergleichslinie $V_i$ verteilt sind, **dadurch gekennzeichnet, dass**

- entlang jeder horizontalen Vergleichslinie $L_j$, entlang deren die Farbflecken $P_{ij}$ verteilt sind, Farbvergleiche ausgeführt werden,
- entlang der mindestens einen vertikalen Vergleichslinie $L_j$ aus den Vergleichen, die an den Farbflecken $P_{ij}$ ausgeführt werden, die entlang dieser mindestens einen vertikalen Vergleichslinie $L_j$ verteilt sind, eine Korrekturfunktion $A_i(l)$ vertikaler räumlicher Ungleichförmigkeiten erhalten wird,
- entlang jeder horizontalen Vergleichslinie $L_j$ der Gradient $S'_m(l)$ der Farbvergleiche $S_m(l)$ innerhalb jedes der Farbflecken $P_{ij}$ berechnet wird und die Korrekturfunktion $A_j(l)$ räumlicher Ungleichförmigkeiten entlang dieser horizontalen Vergleichslinie $L_j$ ebenfalls aus der Korrekturfunktion $A_i(l)$ vertikaler räumlicher Ungleichförmigkeiten erhalten wird.

**Revendications**

1. Procédé de génération de carte 2D de non-uniformité spatiale pour un dispositif de reproduction d'images à l'aide d'au moins un graphique de calibration (1) comprenant une série de patchs de couleur $P_{ij}$ répartis sur la totalité de la surface 2D pour compenser la non-uniformité, chacun desdits patchs de couleur $P_{ij}$ étant de couleur uniforme et ayant une calibration de couleurs $C_{ij}$, comprenant :

- la mise en image dudit au moins un graphique de calibration à l'aide dudit dispositif de reproduction d'images,
- la mesure de la couleur $S_m(l)$ au sein de chaque patch dudit au moins un graphique de calibration mis en image,
- la déduction d'une carte 2D de facteurs de correction de non-uniformité des couleurs à partir desdites mesures de couleur $S_m(l)$,

**caractérisé en ce que** :

- pour chaque patch de couleur, plusieurs mesures de couleur $S_m(l)$ sont réalisées à différents emplacements spatiaux au sein dudit patch de couleur ;

- au moins une fonction de correction de non-uniformité spatiale A(l) est obtenue du rapport du gradient S'$_m$(l) des mesures de couleur S$_m$(l) dans ces différents emplacements spatiaux de chaque patch de couleur par rapport aux mesures de couleur elles-mêmes S$_m$(l) à ces différents emplacements spatiaux,

- ladite carte 2D de facteurs de correction de non-uniformité des couleurs est dérivée et, au besoin, interpolée, à partir d'une série de valeurs de ladite au moins une fonction de correction de non-uniformité spatiale A(l).

**2.** Procédé de génération de carte 2D de non-uniformité spatiale selon la revendication 1, dans lequel, dans ledit au moins un graphique de calibration (1), les patchs de couleur P$_{ij}$ sont répartis sur ladite surface 2D le long d'au moins une ligne de mesure L$_j$, **caractérisé en ce que** :

- les mesures de couleur sont réalisées le long de ladite au moins une ligne de mesure L$_j$, le long desquelles les patchs de couleur P$_{ij}$ sont répartis,

- ledit gradient S'$_m$(l) des mesures de couleur S$_m$(l) est calculé au sein de chacun desdits patchs de couleur P$_{ij}$, le long de ladite au moins une ligne de mesure L$_j$,

- ladite au moins une fonction de correction de non-uniformité spatiale A$_j$(l) est obtenue le long de ladite au moins une ligne de mesure L$_j$.

**3.** Procédé de génération de carte 2D de non-uniformité spatiale selon la revendication 1, dans lequel, dans ledit au moins un graphique de calibration (1), les patchs de couleur P$_{ij}$ sont répartis sur ladite surface 2D le long d'une pluralité de lignes de mesure horizontales L$_j$, et certains de ces patchs de couleur P$_{ij}$ sont également répartis sur ladite surface 2D le long d'au moins une ligne de mesure verticale V$_i$, **caractérisé en ce que** :

- les mesures de couleur sont réalisées le long de chaque ligne de mesure horizontale L$_j$, le long desquelles les patchs de couleurs P$_{ij}$ sont répartis,

- une fonction de correction de non-uniformité spatiale verticale A$_i$(l) le long de ladite au moins une ligne de mesure verticale L$_j$ est obtenue à partir des mesures qui sont réalisées sur les patchs de couleur P$_{ij}$ répartis le long de ladite au moins une ligne de mesure verticale L$_j$,

- le long de chaque ligne de mesure horizontale L$_j$, ledit gradient S'$_m$(l) des mesures de couleur S$_m$(l) est calculé au sein de chacun desdits patchs de couleur P$_{ij}$, et ladite fonction de correction de non-uniformité spatiale A$_j$(l) le long de cette ligne de mesure horizontale L$_j$ est obtenue également de ladite fonction de correction de non-uniformité spatiale verticale A$_i$(l).

**4.** Procédé de génération de carte 2D de non-uniformité spatiale pour un dispositif de capture d'images à l'aide d'au moins un graphique de calibration (1) comprenant une série de patchs de couleur P$_{ij}$ répartis sur la totalité de la surface 2D pour compenser la non-uniformité, chacun desdits patchs de couleur P$_{ij}$ étant de couleur uniforme et ayant une calibratiode couleurs C$_{ij}$, comprenant :

- la capture dudit au moins un graphique de calibration à l'aide dudit dispositif de capture d'images,

- la comparaison de la couleur capturée de chaque patch P$_{ij}$ dudit au moins un graphique de calibration avec la couleur de calibration C$_{ij}$ dudit patch P$_{ij}$ de manière à déduire une carte 2D de facteurs de correction de non-uniformité des couleurs, **caractérisé en ce que** :

- pour chaque patch de couleur, plusieurs comparaisons de couleur S$_m$(l) sont réalisées à différents emplacements spatiaux au sein dudit patch de couleur ;

- au moins une fonction de correction de non-uniformité spatiale A(l) est obtenue du rapport du gradient S'$_m$(l) des comparaisons de couleur S$_m$(l) dans ces différents emplacements spatiaux de chaque patch de couleur par rapport aux comparaisons de couleur elles-mêmes S$_m$(l) à ces différents emplacements spatiaux,

- ladite carte 2D de facteurs de correction de non-uniformité des couleurs est dérivée et, au besoin, interpolée, à partir d'une série de valeurs de ladite au moins une fonction de correction de non-uniformité spatiale A(l).

**5.** Procédé de génération de carte 2D de non-uniformité spatiale selon la revendication 4, dans lequel, dans ledit au moins un graphique de calibration (1), les patchs de couleur P$_{ij}$ sont répartis sur ladite surface 2D le long d'au moins une ligne de comparaison L$_j$, **caractérisé en ce que** :

- les comparaisons de couleur sont réalisées le long de ladite au moins une ligne de comparaison L$_j$, le long desquelles les patchs de couleur P$_{ij}$ sont répartis,

- ledit gradient S'$_m$(l) des comparaisons de couleur S$_m$(l) est calculé au sein de chacun desdits patchs de couleur P$_{ij}$, le long de ladite au moins une ligne de comparaison L$_j$,

- ladite au moins une fonction de correction de non-uniformité spatiale A$_j$(l) est obtenue le long de ladite au moins une ligne de comparaison L$_j$.

**6.** Procédé de génération de cartes 2D de non-uniformité spatiale selon la revendication 4, dans lequel, dans ledit au moins un graphique de calibration (1), les patchs de couleur $P_{ij}$ sont répartis sur ladite surface 2D le long d'une pluralité de lignes de comparaison horizontales $L_j$, et certains de ces patchs de couleur $P_{ij}$ sont également répartis sur ladite surface 2D le long d'au moins une ligne de comparaison verticale $V_i$, **caractérisé en ce que** :

    - les comparaisons de couleur sont réalisées le long de chaque ligne de comparaison horizontale $L_j$, le long desquelles les patchs de couleur $P_{ij}$ sont répartis,

    - une fonction de correction de non-uniformité spatiale verticale $A_i(l)$ le long de ladite au moins une ligne de comparaison verticale $L_j$ est obtenue à partir des comparaisons qui sont réalisées sur les patchs de couleur $P_{ij}$ répartis le long de cette au moins une ligne de comparaison verticale $L_j$,

    - le long de chaque ligne de comparaison horizontale $L_j$, ledit gradient $S'_m(l)$ des comparaisons de couleur $S_m(l)$ est calculé au sein de chacun desdits patchs de couleur $P_{ij}$, et ladite fonction de correction de non-uniformité spatiale $A_j(l)$ le long de cette ligne de comparaison horizontale $L_j$ est obtenue également de ladite fonction de correction de non-uniformité spatiale verticale $A_i(l)$.

Fig.1

1

P$_{11}$ P$_{21}$ P$_{31}$ P$_{41}$ P$_{51}$ P$_{61}$ P$_{71}$ P$_{81}$ P$_{91}$ P$_{10.1}$ P$_{11.1}$

L$_1$

L$_2$

L$_3$

P$_{12}$

P$_{13}$

P$_{14}$

P$_{15}$

P$_{16}$

P$_{17}$

P$_{18}$

P$_{19}$

Fig.2

—◇— Attenuation (x40)　- - - - Original Signal So(l)　———— Attenuated Signal Sm(l)

45

40

35

30

25

20

15

10

5

0

Fig.3

Fig.4

Fig.5

Polynomial regression on $S_i'/S_i = A'/A$

$y = -7.03E\text{-}09x^4 + 7.46E\text{-}08x^3 + 2.60E\text{-}05x^2 - 1.92E\text{-}03x + 3.39E\text{-}02$

Fig.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7170535 B
- US 6494557 B
- US 2003063338 A
- WO 2007025878 A
- US 4745467 A
- US 6404517 B
- US 6069973 A
- US 6284445 B
- US 5416613 A
- US 6717674 B